(19) Europäisches Patentamt / European Patent Office / Office européen des brevets

(11) **EP 4 312 071 A1**

(12) **EUROPEAN PATENT APPLICATION**

(43) Date of publication:
**31.01.2024 Bulletin 2024/05**

(21) Application number: **23184788.0**

(22) Date of filing: **11.07.2023**

(51) International Patent Classification (IPC):
**G02B 26/08** (2006.01)    **G02B 26/10** (2006.01)
**H04N 9/31** (2006.01)    **G09G 3/02** (2006.01)

(52) Cooperative Patent Classification (CPC):
**G09G 3/025; G02B 26/0833; G02B 26/101;
G02B 26/105; G09G 3/346; H04N 9/3194;**
G09G 2320/064

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.07.2022 JP 2022120942**

(71) Applicant: **FUJIFILM Corporation
Tokyo 106-8620 (JP)**

(72) Inventor: **NAONO, Takayuki
No. 577, Ushijima, Kaisei-machi,
Ashigarakami-gun,
Kanagawa, 258-8577 (JP)**

(74) Representative: **HGF
HGF Limited
1 City Walk
Leeds LS11 9DX (GB)**

(54) **IMAGE PROJECTION DEVICE AND CONTROL METHOD FOR IMAGE PROJECTION DEVICE**

(57)    Provided are an image projection device (10) and a control method for an image projection device (10) capable of projecting an image (P1) over a wide range with a sufficient resolution. The image projection device (10) includes: a light source (3); an optical scanning element (2) that enables scanning with light (La) by deflecting the light (La) by changing a deflection angle (R) and a rotation angle ($\theta$) of a movable mirror (20); an optical member (8) that projects the light (La) by deflecting the light (La) with which scanning is performed by the optical scanning element (2) in a circumferential direction; a sensor (5) that detects the deflection angle (R) and the rotation angle ($\theta$) at a specific time point or consecutive time points in a specific period; and a processor (40), in which the processor (40) determines a target scanning trajectory (Ts) of the movable mirror (20), which is necessary for projecting a target image (P1), and a target light emission timing (Tt) in the target scanning trajectory (Ts), drives the optical scanning element (2) based on the target scanning trajectory (Ts), calculates a trajectory (Q) of the movable mirror (20) based on a detection value of the sensor (5), determines a light emission timing based on the target light emission timing (Tt) and the trajectory (Q) of the movable mirror (20), and causes the light source (3) to emit the light (La) based on the determined light emission timing.

FIG. 1

EP 4 312 071 A1

**Description**

BACKGROUND OF THE INVENTION

1. Field of the Invention

The technology of the present disclosure relates to an image projection device and a control method for an image projection device.

2. Description of the Related Art

A technology of performing omnidirectional scanning with laser light at 360 degrees (hereinafter, referred to as omnidirectional scanning) is known, and is used in a light detection and ranging (LiDAR) device, a commercial image projection device, and the like. In the related art, for the omnidirectional scanning, a mechanical scanning method of performing omnidirectional scanning with laser light by rotating a laser light source or a light deflection member such as a prism that deflects the laser light with a motor has been used (for example, see JP2008-170500A).

SUMMARY OF THE INVENTION

However, since the mechanical scanning method uses a mechanical mechanism such as a motor, the device is large and heavy, and there is a problem in operational reliability and the like. In particular, in an image projection device, since the rotation speed is low in the mechanical scanning method, it is not possible to project an image over a wide range with a sufficient resolution.

An object of the technology of the present disclosure is to provide an image projection device and a control method for an image projection device capable of projecting an image over a wide range with a sufficient resolution.

In order to achieve the above-mentioned object, an image projection device of the present disclosure comprises: a light source that emits light; an optical scanning element that has a movable mirror on which the light is incident and that enables scanning with the light by deflecting the light by changing a deflection angle and a rotation angle of the movable mirror; an optical member that projects the light by deflecting the light with which scanning is performed by the optical scanning element in a circumferential direction; a sensor that detects the deflection angle and the rotation angle at a specific time point or consecutive time points in a specific period; and a processor, in which the processor determines a target scanning trajectory of the movable mirror, which is necessary for projecting a target image, and a target light emission timing in the target scanning trajectory, drives the optical scanning element based on the target scanning trajectory, calculates a trajectory of the movable mirror based on a detection value of the sensor, determines a light emission timing based on the target light emission timing and the trajectory of the movable mirror, and causes the light source to emit the light based on the determined light emission timing.

It is preferable that the target scanning trajectory is a trajectory that passes through the same pixel in the image a plurality of times in one frame period for projecting the image, and that the processor causes the light source to emit the light in a case in which the trajectory of the movable mirror passes through the pixel.

It is preferable that the image includes a plurality of pixels with different numbers of times of passing of the target scanning trajectory.

It is preferable that the target scanning trajectory is represented by the deflection angle and the rotation angle, and that the processor determines a range of the deflection angle according to a width in a vertical direction of the image.

It is preferable that the processor changes an interval of the target scanning trajectory in a direction of the deflection angle according to a resolution of the image.

It is preferable that the sensor is a position detection sensor that receives light for position detection reflected by a back surface of the movable mirror and detects a position of the received light.

A control method for an image projection device of the present disclosure is a control method for an image projection device including a light source that emits light, an optical scanning element that has a movable mirror on which the light is incident and that enables scanning with the light by deflecting the light by changing a deflection angle and a rotation angle of the movable mirror, an optical member that projects the light by deflecting the light with which scanning is performed by the optical scanning element in a circumferential direction, and a sensor that detects the deflection angle and the rotation angle at a specific time point or consecutive time points in a specific period, the control method comprising: determining a target scanning trajectory of the movable mirror, which is necessary for projecting a target image, and a target light emission timing in the target scanning trajectory; driving the optical scanning element based on the target scanning trajectory; calculating a trajectory of the movable mirror based on a detection value of the sensor; determining a light emission timing based on the target light emission timing and the trajectory of the movable mirror; and causing the light source to emit the light based on the determined light emission timing.

According to the technology of the present disclosure, it is to provide an image projection device and a control method for an image projection device capable of projecting an image over a wide range with a sufficient resolution.

BRIEF DESCRIPTION OF THE DRAWINGS

Fig. 1 is a diagram schematically showing an image projection device.
Fig. 2 is a diagram schematically showing an omnidirectional lens.
Fig. 3 is a block diagram showing an example of a hardware configuration of a driving controller.
Fig. 4 is a diagram schematically showing a micromirror device.
Figs. 5A and 5B are diagrams showing an example of a driving signal applied to a first actuator and a second actuator, where Fig. 5A shows a first driving signal and Fig. 5B shows a second driving signal.
Fig. 6 is a diagram illustrating a process executed by a target determination unit, a trajectory calculation unit, and a light emission timing determination unit.
Fig. 7 is a diagram showing an example of a target image.
Fig. 8 is a diagram showing an example of a target scanning trajectory.
Fig. 9 is a diagram showing an example of a target light emission timing.
Fig. 10 is a diagram showing an example of a target light emission timing.
Fig. 11 is a diagram showing an example of a driving voltage waveform.
Fig. 12 is a diagram showing an example of a scanning trajectory calculation value.
Fig. 13 is a diagram showing an image according to an example.
Fig. 14 is a diagram conceptually showing a target scanning trajectory according to the example.
Fig. 15 is a diagram showing a relationship between a target scanning trajectory and a target light emission timing according to an example.

DESCRIPTION OF THE PREFERRED EMBODIMENTS

An example of an embodiment relating to the technology of the present disclosure will be described with reference to the accompanying drawings.

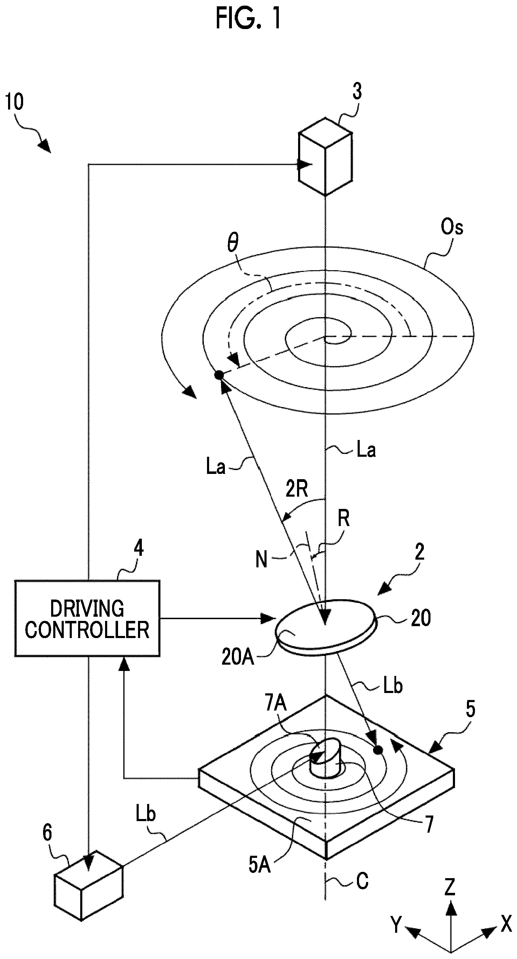

Fig. 1 schematically shows an image projection device 10 according to an embodiment. The image projection device 10 includes a micromirror device (hereinafter, referred to as micromirror device (MMD)) 2, a light source 3, a driving controller 4, a position detection sensor 5, and a sensor light source 6. The image projection device 10 projects an image by reflecting laser light La emitted from the light source 3 by the MMD 2 and performing omnidirectional scanning with the laser light La under the control of the driving controller 4. The laser light La is an example of "light" according to the technology of the present disclosure.

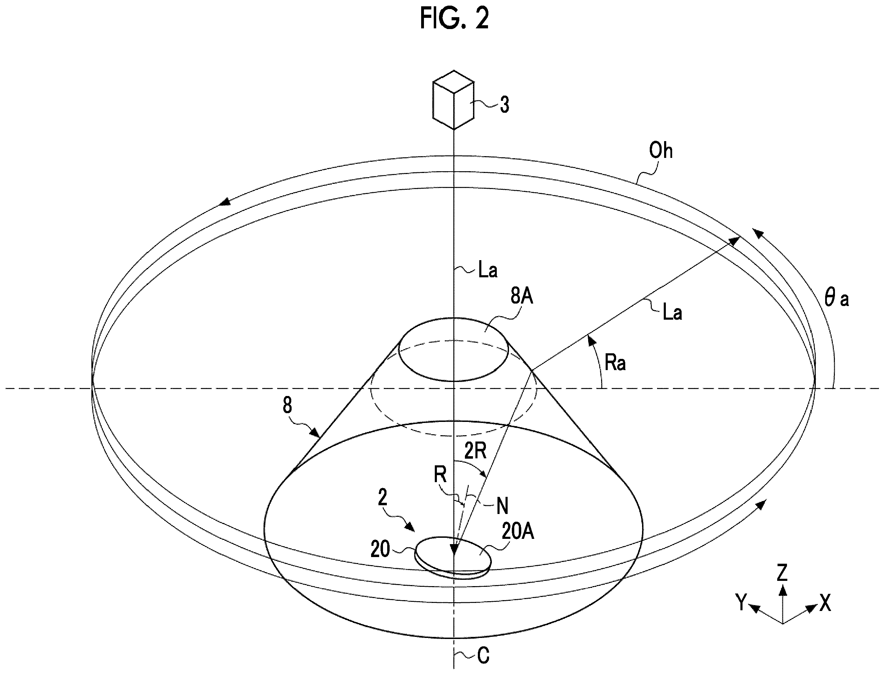

Although not shown in Fig. 1, an omnidirectional lens 8 that deflects the laser light La reflected by the MMD 2 in a circumferential direction is disposed between the light source 3 and the MMD 2 as shown in Fig. 2. The omnidirectional lens 8 is a hollow conical lens. An opening 8A is provided at a top of the omnidirectional lens 8. The laser light La emitted from the light source 3 passes through the opening 8A and is incident on the MMD 2. The omnidirectional lens 8 is an example of an "optical member" according to the technology of the present disclosure.

The optical member of the present disclosure is not limited to the omnidirectional lens 8 shown in Fig. 2, and need only be any one capable of deflecting the laser light La reflected by the MMD 2 in the circumferential direction. The optical member of the present disclosure may be configured of a prism, a combination of mirror members, or the like in addition to a lens.

In the present disclosure, a direction in which the laser light La emitted from the light source 3 is incident on the MMD 2 is defined as a Z direction, one direction orthogonal to the Z direction is defined as an X direction, and a direction orthogonal to the Z direction and the X direction is defined as a Y direction.

The MMD 2 is a piezoelectric biaxial drive type micro electro mechanical systems (MEMS) mirror device that has a movable mirror 20 and enables the movable mirror 20 to swing around a first axis $a_1$ parallel to the X direction and a second axis $a_2$ parallel to the Y direction. The MMD 2 is an example of an "optical scanning element" according to the technology of the present disclosure.

The light source 3 is, for example, a laser diode. The light source 3 makes the laser light La incident perpendicular to a reflecting surface 20A of the movable mirror 20 in a state in which the movable mirror 20 of the MMD 2 is stationary. The MMD2 makes it possible to deflect the laser light La by changing a deflection angle R and a rotation angle $\theta$ of the movable mirror 20. The deflection angle R is an angle formed by a normal line N of the reflecting surface 20A and a rotation axis C. The rotation angle $\theta$ is an angle of the normal line N about the rotation axis C. The rotation axis C is parallel to the Z direction.

An angle formed by the laser light La incident on the movable mirror 20 and the laser light La reflected by the movable mirror 20 is 2R.

The driving controller 4 outputs a driving signal to the light source 3 and the MMD 2 based on target projection image information. The light source 3 generates the laser light La based on the input driving signal and makes the laser light La incident on the MMD 2. The MMD 2 allows the movable mirror 20 to swing around the first axis $a_1$ and the second axis $a_2$ based on the input driving signal.

As will be described in detail below, the driving controller 4 causes the movable mirror 20 to perform a spiral rotation operation including a period in which a swing amplitude around the first axis $a_1$ and a swing amplitude around the second axis $a_2$ linearly change (that is, a spiral rotation operation in which a radius vector linearly changes). As the movable mirror 20 performs the spiral rotation operation about the rotation axis C, scanning is performed with the laser light La so as to draw a spiral trajectory Os on a horizontal plane (XY plane). The spiral trajectory Os is a spiral activation about the rotation axis C.

As shown in Fig. 2, the omnidirectional lens 8 converts the spiral trajectory Os into a helical trajectory Oh about the rotation axis C by deflecting the laser light La reflected by the movable mirror 20 in the circumferential direction. The deflection in the circumferential direction refers to changing an angle of the laser light La with respect to the rotation axis C in a direction of increasing the angle. The omnidirectional lens 8 converts the deflection angle R and the rotation angle θ into an angle Ra and a rotation angle θa. The angle Ra represents an angle of the laser light La emitted from the omnidirectional lens 8 with respect to the horizontal plane. The rotation angle θa represents an angle of the laser light La emitted from the omnidirectional lens 8 around the rotation axis C.

The omnidirectional lens 8 has a variable magnification characteristic that increases the angle of view in a deflection angle direction such that a change range of the angle Ra is larger than a change range of the optical deflection angle 2R. Accordingly, the angle of view can be made larger than an operating range of the movable mirror 20, and an image can be projected over a wide range. The angle Ra and the rotation angle θa represent coordinates in a projection region on which an image is projected.

The position detection sensor 5 is a sensor for detecting the deflection angle R and the rotation angle θ of the movable mirror 20. The position detection sensor 5 is a two-dimensional position sensitive detector (PSD) that receives laser light Lb for position detection emitted from the sensor light source 6 and reflected by the back surface of the movable mirror 20 and detects a position of the received laser light Lb. The back surface of the movable mirror 20 is a surface opposite to the reflecting surface 20A.

Specifically, a light deflection member 7 is provided at the center of a light-receiving surface 5A of the position detection sensor 5. For example, the light deflection member 7 has a reflecting surface 7A formed by obliquely cutting a cylindrical base material. The laser light Lb emitted from the sensor light source 6 is incident on the reflecting surface 7A. The reflecting surface 7A reflects the laser light Lb and causes the laser light Lb to be incident on the back surface of the movable mirror 20. The laser light Lb incident on the back surface of the movable mirror 20 is reflected and incident on the light-receiving surface 5A of the position detection sensor 5. The laser light Lb is incident on the light-receiving surface 5A while drawing a spiral trajectory by the spiral rotation operation performed by the movable mirror 20. An incident position of the laser light Lb on the light-receiving surface 5A corresponds to the position of the movable mirror 20 represented by the deflection angle R and the rotation angle θ. The position detection sensor 5 transmits a signal (detection value) representing the incident position of the laser light Lb on the light-receiving surface 5A to the driving controller 4.

The position detection sensor 5 enables real-time detection of the position of the movable mirror 20 at substantially all time points during a period in which the MMD 2 operates. That is, it is possible to detect the deflection angle R and the rotation angle θ at consecutive time points in a specific period. The position detection sensor 5 is an example of a "sensor" according to the technology of the present disclosure.

The sensor of the present disclosure is not limited to the position detection sensor 5 shown in Fig. 1, and need only be any one capable of detecting the deflection angle R and the rotation angle θ of the movable mirror 20. For example, a photodiode that is disposed on a light incident side of the movable mirror 20 and detects a part of the spiral trajectory Os may be used. That is, the sensor of the present disclosure may detect the position of the movable mirror 20 at a specific time point during the period in which the MMD 2 operates. In addition, the sensor of the present disclosure may be a strain sensor incorporated in the MMD 2. The strain sensor generates a voltage corresponding to a stress generated by the swinging of the movable mirror 20. Thus, there is an advantage that the position detection sensor 5 can be manufactured at a relatively low cost by using the photodiode, the strain sensor, or the like.

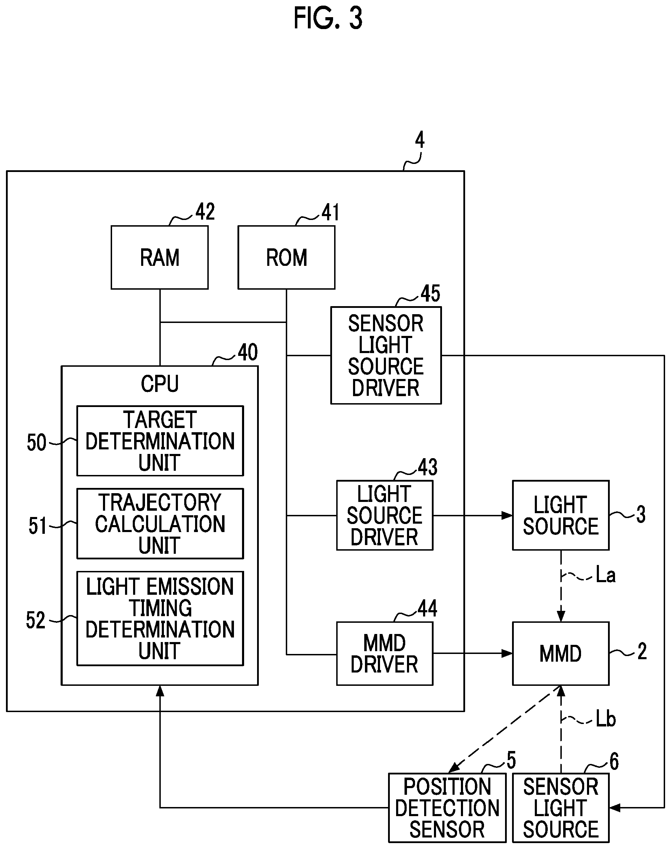

Fig. 3 shows an example of a hardware configuration of the driving controller 4. The driving controller 4 has a central processing unit (CPU) 40, a read only memory (ROM) 41, a random access memory (RAM) 42, a light source driver 43, an MMD driver 44, and a sensor light source driver 45. The CPU 40 is an arithmetic unit that realizes the entire function of the driving controller 4 by reading out a program and data from a storage device such as the ROM 41 into the RAM 42 and executing processing. The CPU 40 is an example of a "processor" according to the technology of the present disclosure.

The ROM 41 is a non-volatile storage device and stores a program for the CPU 40 to execute processing and data such as the image information described above. The RAM 42 is a non-volatile storage device that temporarily holds a program and data.

The light source driver 43 causes the light source 3 to emit the laser light La based on a light emission timing supplied from the CPU 40.

The MMD driver 44 is an electric circuit that outputs a driving signal to the MMD 2 under the control of the CPU 40. In the MMD driver 44, the driving signal is a driving voltage for controlling the timing, period, and deflection angle for allowing the movable mirror 20 to swing. As will be described in detail below, the driving signal includes a first driving signal and a second driving signal.

For example, in the MMD driver 44, the driving signal is created as a digital signal and is output via a digital analog converter (DAC) and an amplification amplifier. The driving signal may be output as a stepped waveform based on the number of resolution bits of a digital signal source. In addition, the driving signal can also be created from a pulse signal, a band-pass filter, or the like.

The CPU 40 controls the light source driver 43 and the MMD driver 44 based on the target image information. As will be described in detail below, the CPU 40 functions as a target determination unit 50, a trajectory calculation unit 51, and a light emission timing determination unit 52.

The sensor light source driver 45 causes the sensor light source 6 to emit the laser light Lb under the control of the CPU 40.

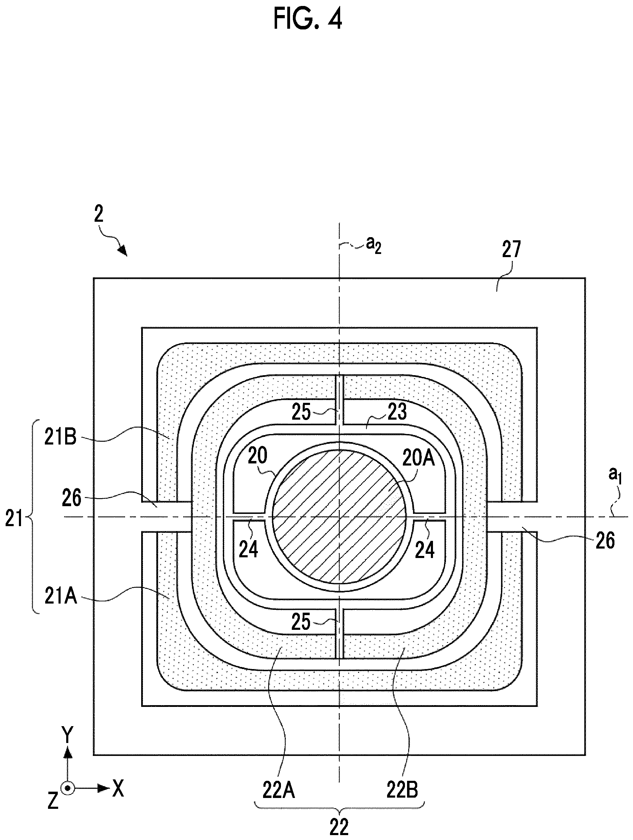

Next, an example of a configuration of the MMD 2 will be described with reference to Fig. 4. Fig. 4 is a schematic diagram of the MMD 2. The MMD 2 has a movable mirror 20, a first actuator 21, a second actuator 22, a support frame 23, a first support portion 24, a second support portion 25, a connecting portion 26, and a fixed portion 27. The MMD 2 is formed, for example, by performing an etching treatment on a silicon on insulator (SOI) substrate.

The movable mirror 20 has a reflecting surface 20A for reflecting incidence light. The reflecting surface 20A is provided on one surface of the movable mirror 20, and is formed of a metal thin film such as gold (Au) and aluminum (Al). The reflecting surface 20A is, for example, circular.

The support frame 23 is disposed to surround the movable mirror 20. The second actuator 22 is disposed to surround the movable mirror 20 and the support frame 23. The first actuator 21 is disposed to surround the movable mirror 20, the support frame 23, and the second actuator 22.

The first support portion 24 connects the movable mirror 20 and the support frame 23 on the first axis $a_1$, and swingably supports the movable mirror 20 around the first axis $a_1$. The first axis $a_1$ is located in a plane including the reflecting surface 20A in a case in which the movable mirror 20 is stationary. For example, the first support portion 24 is a torsion bar stretched along the first axis $a_1$.

The second support portion 25 connects the support frame 23 and the second actuator 22 on the second axis $a_2$, and swingably supports the movable mirror 20 and the support frame 23 around the second axis $a_2$. The second axis $a_2$ is orthogonal to the first axis $a_1$ in the plane including the reflecting surface 20A in a case in which the movable mirror 20 is stationary.

The connecting portion 26 connects the first actuator 21 and the second actuator 22 on the first axis $a_1$. In addition, the connecting portion 26 connects the first actuator 21 and the fixed portion 27 on the first axis $a_1$.

The fixed portion 27 has a rectangular outer shape and surrounds the first actuator 21. Lengths of the fixed portion 27 in the X direction and the Y direction are, for example, about 1 mm to 10 mm, respectively. A thickness of the fixed portion 27 in the Z direction is, for example, about 5 $\mu$m to 0.2 mm.

The first actuator 21 and the second actuator 22 are piezoelectric actuators each comprising a piezoelectric element. The first actuator 21 applies rotational torque around the first axis $a_1$ to the movable mirror 20. The second actuator 22 applies rotational torque around the second axis $a_2$ to the movable mirror 20. Thereby, the movable mirror 20 swings around the first axis $a_1$ and around the second axis $a_2$.

The first actuator 21 is an annular thin plate member that surrounds the movable mirror 20, the support frame 23, and the second actuator 22 in the XY plane. The first actuator 21 is composed of a pair of a first movable portion 21A and a second movable portion 21B. Each of the first movable portion 21A and the second movable portion 21B is semi-annular. The first movable portion 21A and the second movable portion 21B have a shape that is line-symmetrical with respect to the first axis $a_1$, and are connected on the first axis $a_1$.

The support frame 23 is an annular thin plate member that surrounds the movable mirror 20 in the XY plane.

The second actuator 22 is an annular thin plate member that surrounds the movable mirror 20 and the support frame 23 in the XY plane. The second actuator 22 is composed of a pair of a first movable portion 22A and a second movable portion 22B. Each of the first movable portion 22A and the second movable portion 22B is semi-annular. The first movable portion 22A and the second movable portion 22B have a shape that is line-symmetrical with respect to the second axis $a_2$, and are connected on the second axis $a_2$.

In the first actuator 21, the first movable portion 21A and the second movable portion 21B are each provided with a piezoelectric element. In addition, in the second actuator 22, the first movable portion 22A and the second movable portion 22B are each provided with a piezoelectric element.

In this example, the first actuator 21 and the second actuator 22 are configured as separate annular structures, but the present invention is not limited to this, and the first actuator 21 and the second actuator 22 may be configured to coexist in one structure. For example, a piezoelectric material is divided and disposed in one annular structure. By providing the first driving signal and the second driving signal to each of two piezoelectric material parts individualized by the division in this way, the mirror swinging around the first axis $a_1$ and around the second axis $a_2$ can be realized.

The mirror swinging around the first axis $a_1$ is controlled by the driving signal (hereinafter, referred to as a first driving signal) given to the first actuator 21 by the driving controller 4. The first driving signal is, for example, a sinusoidal AC voltage. The first driving signal includes a driving voltage waveform $V_{1A}$ (t) applied to the first movable portion 21A and a driving voltage waveform $V_{1B}$ (t) applied to the second movable portion 21B. The driving voltage waveform $V_{1A}$ (t) and the driving voltage waveform $V_{1B}$ (t) are in an anti-phase with each other (that is, the phase difference is 180°).

The mirror swinging around the second axis $a_2$ is controlled by the driving signal (hereinafter, referred to as a second driving signal) given to the second actuator 22 by the driving controller 4. The second driving signal is, for example, a sinusoidal AC voltage. The second driving signal includes a driving voltage waveform $V_{2A}$ (t) applied to the first movable portion 22A and a driving voltage waveform $V_{2B}$ (t) applied to the second movable portion 22B. The driving voltage waveform $V_{2A}$ (t) and the driving voltage waveform $V_{2B}$ (t) are in an anti-phase with each other (that is, the phase difference is 180°).

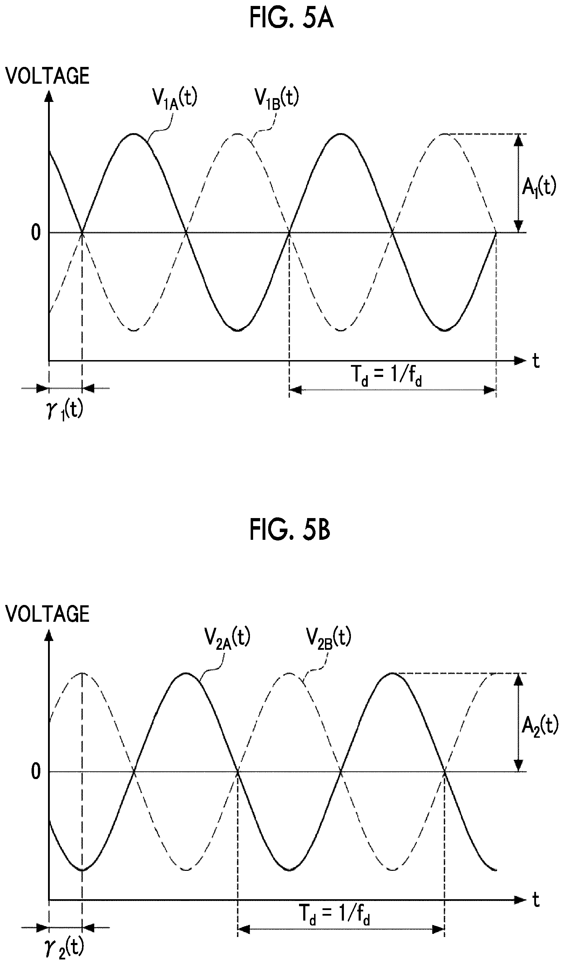

Figs. 5A and 5B show an example of a driving signal applied to the first actuator 21 and the second actuator 22. Fig. 5A shows the driving voltage waveforms $V_{1A}$ (t) and $V_{1B}$ (t) included in the first driving signal. Fig. 5B shows the driving voltage waveforms $V_{2A}$ (t) and $V_{2B}$ (t) included in the second driving signal.

The driving voltage waveforms $V_{1A}$ (t) and $V_{1B}$ (t) are represented by Equations (1A) and (1B), respectively.

$$V_{1A}(t) = A_1(t)\sin\left(2\pi f_d t + \gamma_1(t)\right) \quad \cdots (1A)$$

$$V_{1B}(t) = A_1(t)\sin\left(2\pi f_d t + \gamma_1(t) + \pi\right) \quad \cdots (1B)$$

Here, t is a time. $f_d$ is the driving frequency. $A_1$ (t) is an amplitude and changes with the time t. $\gamma_1$ (t) is a phase and changes with the time t. A phase difference between the driving voltage waveform $V_{1A}$ (t) and the driving voltage waveform $V_{1B}$ (t) is $\pi$ (that is, 180°).

That is, the first driving signal is a periodic voltage signal whose amplitude and phase change with time. By applying the driving voltage waveforms $V_{1A}$ (t) and $V_{1B}$ (t) to the first movable portion 21A and the second movable portion 21B, the movable mirror 20 swings around the first axis $a_1$ at a period $T_d$ (= 1/fa).

The driving voltage waveforms $V_{2A}$ (t) and $V_{2B}$ (t) are represented by Equations (2A) and (2B), respectively.

$$V_{2A}(t) = A_2(t)\sin\left(2\pi f_d t + \gamma_2(t) + \varphi\right) \quad \cdots (2A)$$

$$V_{2B}(t) = A_2(t)\sin\left(2\pi f_d t + \gamma_2(t) + \varphi + \pi\right) \quad \cdots (2B)$$

Here, t is a time. $f_d$ is the driving frequency. $A_2$ (t) is an amplitude and changes with the time t. $\gamma_2$ (t) is a phase and changes with the time t. A phase difference between the driving voltage waveform $V_{2A}$ (t) and the driving voltage waveform $V_{2B}$ (t) is $\pi$ (that is, 180°). In addition, $\varphi$ is the phase difference between the driving voltage waveforms $V_{1A}$ (t) and $V_{1B}$ (t) and the driving voltage waveforms $V_{2A}$ (t) and $V_{2B}$ (t). In the present embodiment, $\varphi = \pi/2$ (that is, 90°) in order to cause the movable mirror 20 to perform a circular spiral rotation operation. A value of $\varphi$ may be set to a value other than $\pi/2$. In a case in which $\varphi$ is a value other than $\pi/2$, the movable mirror 20 performs an elliptical spiral rotation operation.

That is, the second driving signal is a periodic voltage signal whose amplitude and phase change with time. By applying the driving voltage waveforms $V_{2A}$ (t) and $V_{2B}$ (t) to the first movable portion 22A and the second movable portion 22B, the movable mirror 20 swings around the second axis $a_2$ at a period $T_d$ (= 1/fa).

The amplitude $A_1$ (t) and the phase $\gamma_1$ (t) of the first driving signal are represented by polynomials as shown in Equations (3) and (4), respectively. The amplitude $A_2$ (t) and the phase $\gamma_2$ (t) of the second driving signal are represented by polynomials as shown in Equations (5) and (6), respectively. In the present embodiment, the polynomial is a quadratic function, but it may be a cubic or higher function. The order of the polynomial is determined according to the accuracy of the spiral rotation operation required and the computing power of the processor. $m_{kp}$ and $n_{kp}$ are coefficients. Here, k is 0, 1, or 2. p is a or b. In the present embodiment, the phase $\gamma_2$ (t) is represented by a polynomial including the phase

difference $\varphi$.

$$A_1(t) = m_{2a}t^2 + m_{1a}t + m_{0a} \quad \cdots (3)$$

$$\gamma_1(t) = n_{2a}t^2 + n_{1a}t + n_{0a} \quad \cdots (4)$$

$$A_2(t) = m_{2b}t^2 + m_{1b}t + m_{0b} \quad \cdots (5)$$

$$\gamma_2(t) + \varphi = n_{2b}t^2 + n_{1b}t + n_{0b} \quad \cdots (6)$$

The coefficients $m_{kp}$ and $n_{kp}$ are determined such that the swing amplitude around the first axis $a_1$ and the swing amplitude around the second axis $a_2$ of the movable mirror 20 change linearly with respect to the time (that is, a radius vector of the spiral trajectory changes at a constant rate).

For example, the coefficients $m_{kp}$ and $n_{kp}$ are determined by a method in which the driving controller 4 actually inputs the first driving signal and the second driving signal to the MMD 2 and adjustment is performed while confirming the deflection angle R of the movable mirror 20 with a sensor or the like.

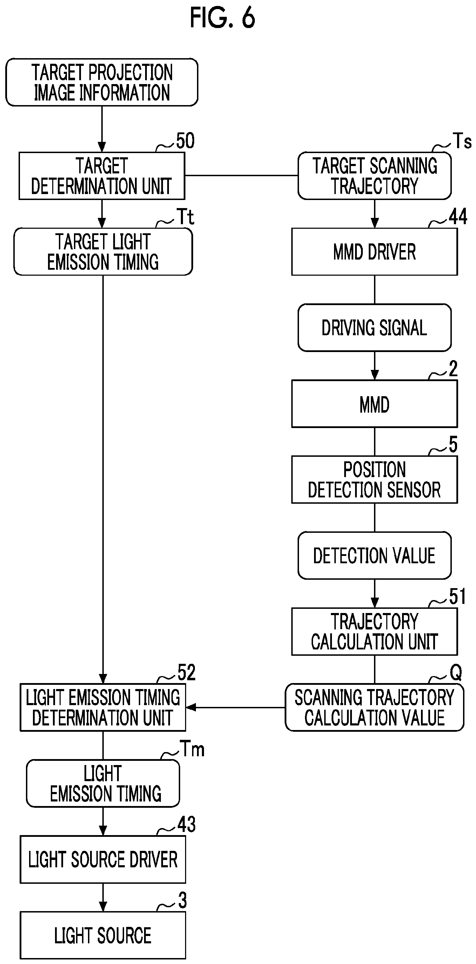

Fig. 6 illustrates a process executed by the target determination unit 50, the trajectory calculation unit 51, and the light emission timing determination unit 52. First, the target determination unit 50 reads the target image information stored in the ROM 41 or the like, and determines a target scanning trajectory Ts of the movable mirror 20 necessary for projecting a target image P1 and a target light emission timing Tt in the target scanning trajectory Ts.

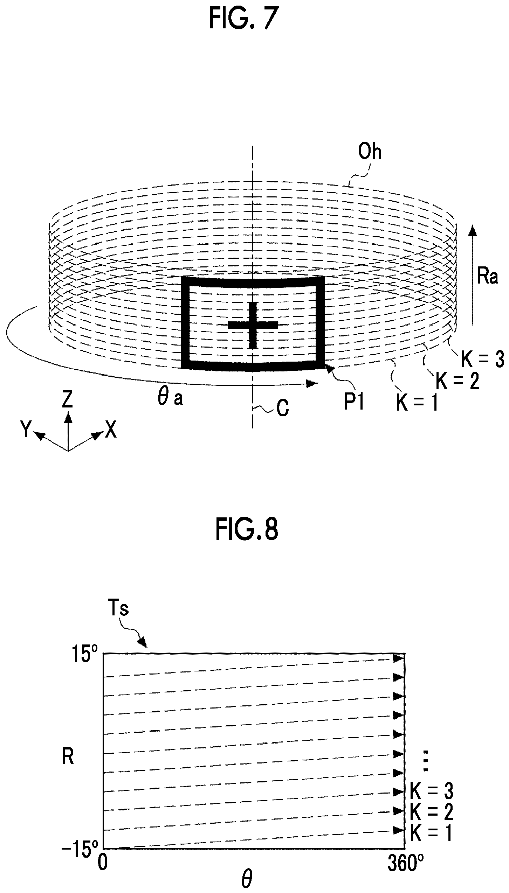

Fig. 7 shows an example of the target image P1. The target image P1 is represented by the angle Ra and the rotation angle $\theta$a as coordinates in the helical trajectory Oh converted by the omnidirectional lens 8. A cycle K shown in Fig. 7 represents a trajectory for one rotation about the rotation axis C in the helical trajectory Oh. The time required for one cycle is the period $T_d$ described above.

Specifically, the target determination unit 50 determines the target scanning trajectory Ts for scanning a range necessary for projecting the target image P1 based on the variable magnification characteristic of the omnidirectional lens 8.

Fig. 8 shows an example of the target scanning trajectory Ts. The target scanning trajectory Ts is represented by the deflection angle R and the rotation angle $\theta$. The target determination unit 50 determines a range of the deflection angle R according to a width of the image P1 in a vertical direction (that is, a direction of the angle Ra). The target determination unit 50 increases the range of the deflection angle R as the width of the image P1 in the vertical direction increases. In addition, the target determination unit 50 changes an interval of the target scanning trajectory Ts in the direction of the deflection angle R according to a resolution of the image P1. The target determination unit 50 decreases the interval of the target scanning trajectory Ts as the resolution of the image P1 increases. That is, the higher the resolution of the image P1, the greater the number of cycles K constituting the target scanning trajectory Ts.

In addition, the target determination unit 50 determines the target light emission timing Tt by converting the image P1 into ON/OFF information of light emission with the angle Ra and the rotation angle $\theta$a as parameters.

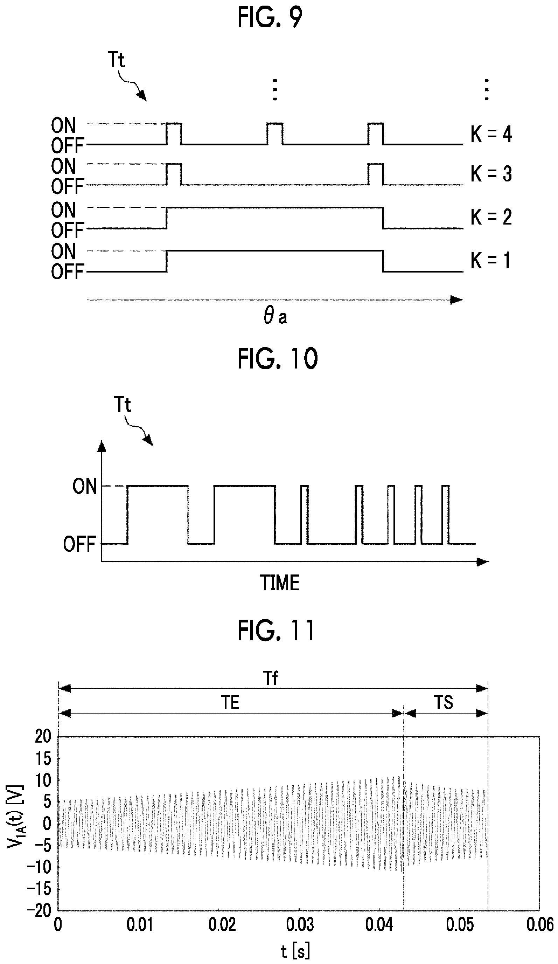

Fig. 9 and Fig. 10 show an example of the target light emission timing Tt. Fig. 9 shows the target light emission timing Tt for each cycle. Fig. 10 shows the target light emission timing Tt with respect to the time.

The target determination unit 50 drives the MMD 2 by supplying the determined target scanning trajectory Ts to the MMD driver 44. The MMD driver 44 generates a first driving signal and a second driving signal for realizing the target scanning trajectory Ts by performing calculation based on the target scanning trajectory Ts supplied from the target determination unit 50.

Fig. 11 shows an example of the driving voltage waveform $V_{1A}(t)$. Fig. 11 shows the driving voltage waveform $V_{1A}(t)$ in one frame period Tf for projecting the image P1. The one frame period Tf includes an expansion period TE in which the deflection angle R increases and a contraction period TS in which the deflection angle R decreases.

The movable mirror 20 of the MMD 2 performs the spiral rotation operation by receiving the first driving signal and the second driving signal from the MMD driver 44. The position detection sensor 5 detects the deflection angle R and the rotation angle $\theta$ of the movable mirror 20 and outputs a detection value.

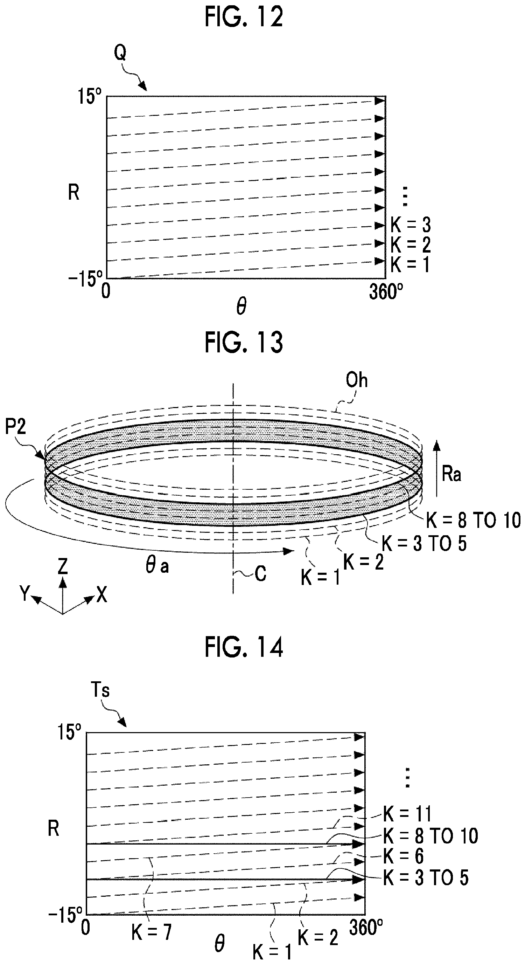

The trajectory calculation unit 51 calculates an actual trajectory of the movable mirror 20 based on the detection value output from the position detection sensor 5. Hereinafter, the trajectory calculated by the trajectory calculation unit 51 is referred to as a scanning trajectory calculation value Q. Fig. 12 shows an example of the scanning trajectory calculation value Q. The scanning trajectory calculation value Q is represented by the deflection angle R and the rotation angle $\theta$, as with the target scanning trajectory Ts. In a case in which the movable mirror 20 performs an ideal spiral rotation operation, the scanning trajectory calculation value Q matches the target scanning trajectory Ts.

In a case in which the position detection sensor 5 is a sensor such as a photodiode that detects the position of the movable mirror 20 at a specific time point, the trajectory calculation unit 51 generates the scanning trajectory calculation value Q by estimating a continuous trajectory based on the detection value at the specific time point. The scanning trajectory calculation value Q may include a trigger signal representing a start of one frame period.

The light emission timing determination unit 52 determines a light emission timing Tm based on the target light emission timing Tt determined by the target determination unit 50 and the scanning trajectory calculation value Q calculated by the trajectory calculation unit 51. Specifically, the light emission timing determination unit 52 determines the light emission timing Tm by associating the target light emission timing Tt with the scanning trajectory calculation value Q. In a case in which the scanning trajectory calculation value Q includes the trigger signal representing the start of one frame period, the light emission timing Tm is determined in accordance with the trigger signal. The light emission timing determination unit 52 may determine the light emission timing Tm by detecting an error between the target scanning trajectory Ts and the scanning trajectory calculation value Q and correcting the target light emission timing Tt based on the detected error.

The light emission timing determination unit 52 supplies the determined light emission timing Tm to the light source driver 43 to emit the laser light La to the light source 3 based on the light emission timing Tm. As a result, the image P1 is projected.

As described above, according to the present embodiment, since the omnidirectional lens 8 having the variable magnification characteristic is used, it is possible to project an image over a wide range. In addition, since the laser light La is deflected by the MMD 2 that can be driven at a high speed, it is possible to project an image with a sufficient resolution.

[Examples]

Next, an example of the image projection device 10 will be described. In this example, the image projection device 10 was created, and an image P2 shown in Fig. 13 was projected by performing omnidirectional scanning with the image projection device 10. The image P2 has two bright lines in the whole circumferential direction and a thin dark band between the two bright lines.

A red laser was used as the light source 3. In addition, in the MMD 2 used in the example, since both a resonance frequency around the first axis $a_1$ and a resonance frequency around the second axis $a_2$ were about 1400 Hz, the driving frequency $f_d$ was set to about 1400 Hz. By utilizing the resonance phenomenon, a fluctuation range of the deflection angle R is expanded, so that the angle of view can be increased.

Fig. 14 conceptually shows the target scanning trajectory Ts for projecting the image P2. In this example, one frame period was set to 60 cycles. In order to project the two bright lines, the target scanning trajectory Ts is characterized in that the deflection angle R is fixed without changing in cycles of $3 \leq K \leq 5$ and $8 \leq K \leq 10$. That is, in the example shown in Fig. 14, the target scanning trajectory Ts passes through each pixel included in $3 \leq K \leq 5$ and $8 \leq K \leq 10$ three times in one frame period for projecting the image P2.

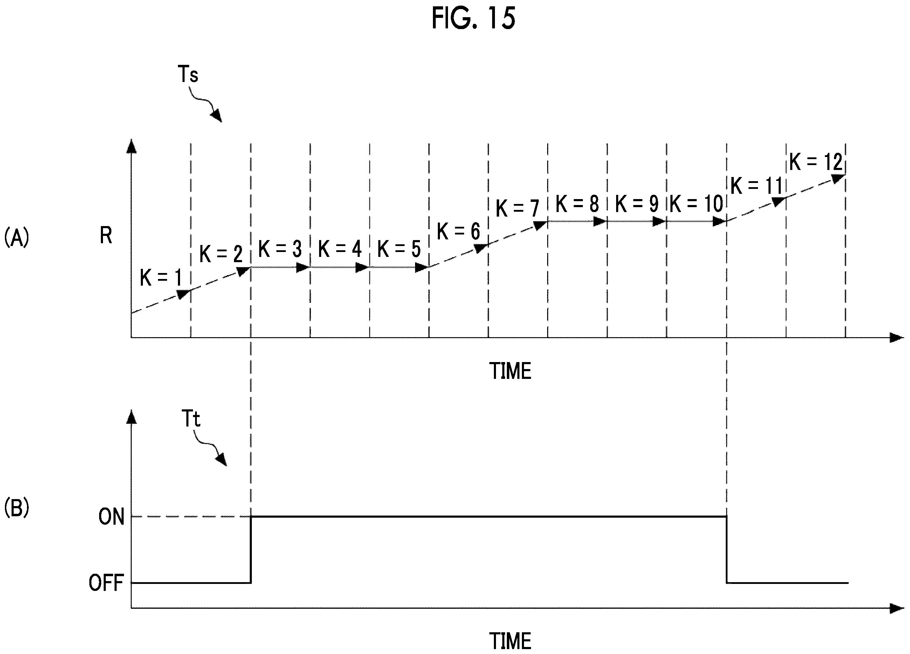

Fig. 15 shows a relationship between the target scanning trajectory Ts for projecting the image P2 and the target light emission timing Tt. (A) of Fig. 15 shows the target scanning trajectory Ts. (B) of Fig. 15 shows the target light emission timing Tt. The target light emission timing Tt specifies that the light source 3 is turned on in the cycle of $3 \leq K \leq 10$ and the light source 3 is turned off in the other cycles.

Therefore, in the cycle of $3 \leq K \leq 10$, the laser light La is emitted from the light source 3 in a case in which the trajectory of the movable mirror 20 passes through each pixel. In the cycles of $3 \leq K \leq 5$ and $8 \leq K \leq 10$, the laser light La is emitted three times in each pixel. In the cycle of $6 \leq K \leq 7$, the laser light La is emitted once in each pixel.

The image projection device 10 was driven using such a target scanning trajectory Ts and a target light emission timing Tt, and a projection plane was provided around the image projection device 10 for visual inspection. As a result, a projection image having two bright lines in the whole circumferential direction and a thin dark band between the two bright lines could be confirmed.

In this example, the target scanning trajectory Ts is set to pass through the same pixel in the image P2 a plurality of times in one frame period for projecting the image P2. In addition, the laser light La is emitted to the light source 3 in a case in which the trajectory of the movable mirror 20 passes through the pixel. Accordingly, the pixel can be displayed brighter than the other pixels.

In addition, in this example, the image includes a plurality of pixels with different numbers of times of passing of the target scanning trajectory Ts. This makes it possible to add contrast to the projection image.

The hardware configuration of the driving controller 4 described in the above-described embodiment can be variously modified. A processing unit of the driving controller 4 may be configured of one processor, or may be configured of a combination of two or more processors of the same type or different types (for example, a combination of a plurality of field programmable gate arrays (FPGAs) and/or a combination of a CPU and an FPGA).

All documents, patent applications, and technical standards mentioned in this specification are incorporated herein by reference to the same extent as in a case where each document, each patent application, and each technical standard are specifically and individually described by being incorporated by reference.

Explanation of References

2: micromirror device (MMD)
3: light source
4: driving controller
5: position detection sensor
5A: light-receiving surface
6: sensor light source
7: light deflection member
7A: reflecting surface
8: omnidirectional lens
8A: opening
10: image projection device
20: movable mirror
20A: reflecting surface
21: first actuator
21A: first movable portion
21B: second movable portion
22: second actuator
22A: first movable portion
22B: second movable portion
23: support frame
24: first support portion
25: second support portion
26: connecting portion
27: fixed portion
40: CPU
41: ROM
42: RAM
43: light source driver
44: MMD driver
45: sensor light source driver
50: target determination unit
51: trajectory calculation unit
52: light emission timing determination unit
C: rotation axis
La, Lb: laser light
N: normal line
Oh: helical trajectory
Os: spiral trajectory
P1, P2: image
Q: scanning trajectory calculation value
Tm: light emission timing
Ts: target scanning trajectory
Tt: target light emission timing

**Claims**

1.  An image projection device comprising:

    a light source that emits light;
    an optical scanning element that has a movable mirror on which the light is incident and that enables scanning with the light by deflecting the light by changing a deflection angle and a rotation angle of the movable mirror;
an optical member that projects the light by deflecting the light with which scanning is performed by the optical scanning element in a circumferential direction;
a sensor that detects the deflection angle and the rotation angle at a specific time point or consecutive time points in a specific period; and
a processor,
wherein the processor

determines a target scanning trajectory of the movable mirror, which is necessary for projecting a target image, and a target light emission timing in the target scanning trajectory,
drives the optical scanning element based on the target scanning trajectory,
calculates a trajectory of the movable mirror based on a detection value of the sensor,
determines a light emission timing based on the target light emission timing and the trajectory of the movable mirror, and
causes the light source to emit the light based on the determined light emission timing.

2. The image projection device according to claim 1,

wherein the target scanning trajectory is a trajectory that passes through the same pixel in the image a plurality of times in one frame period for projecting the image, and
the processor causes the light source to emit the light in a case in which the trajectory of the movable mirror passes through the pixel.

3. The image projection device according to claim 2,
wherein the image includes a plurality of pixels with different numbers of times of passing of the target scanning trajectory.

4. The image projection device according to claim 1,

wherein the target scanning trajectory is represented by the deflection angle and the rotation angle, and
the processor determines a range of the deflection angle according to a width in a vertical direction of the image.

5. The image projection device according to claim 4,
wherein the processor changes an interval of the target scanning trajectory in a direction of the deflection angle according to a resolution of the image.

6. The image projection device according to any one of claims 1 to 5,
wherein the sensor is a position detection sensor that receives light for position detection reflected by a back surface of the movable mirror and detects a position of the received light.

7. A control method for an image projection device including a light source that emits light, an optical scanning element that has a movable mirror on which the light is incident and that enables scanning with the light by deflecting the light by changing a deflection angle and a rotation angle of the movable mirror, an optical member that projects the light by deflecting the light with which scanning is performed by the optical scanning element in a circumferential direction, and a sensor that detects the deflection angle and the rotation angle at a specific time point or consecutive time points in a specific period, the control method comprising:

determining a target scanning trajectory of the movable mirror, which is necessary for projecting a target image, and a target light emission timing in the target scanning trajectory;
driving the optical scanning element based on the target scanning trajectory;
calculating a trajectory of the movable mirror based on a detection value of the sensor;
determining a light emission timing based on the target light emission timing and the trajectory of the movable mirror; and
causing the light source to emit the light based on the determined light emission timing.

# FIG. 1

## FIG. 2

EP 4 312 071 A1

# FIG. 3

# FIG. 4

# FIG. 5A

# FIG. 5B

# FIG. 6

```
TARGET PROJECTION
IMAGE INFORMATION
        │
        ▼
                    ～50                              ～Ts
TARGET                          TARGET SCANNING
DETERMINATION UNIT ─────────── TRAJECTORY
        │                              │
        ▼  ～Tt                        ▼  ～44
TARGET LIGHT                    MMD DRIVER
EMISSION TIMING                        │
        │                              ▼
        │                       DRIVING SIGNAL
        │                              │
        │                              ▼  ～2
        │                       MMD
        │                              │
        │                              ▼  ～5
        │                       POSITION
        │                       DETECTION SENSOR
        │                              │
        │                              ▼
        │                       DETECTION VALUE
        │                              │
        │                              ▼  ～51
        │                       TRAJECTORY
        │                       CALCULATION UNIT
        │                              │
        ▼  ～52                        ▼  ～Q
LIGHT EMISSION TIMING  ◄──────  SCANNING TRAJECTORY
DETERMINATION UNIT              CALCULATION VALUE
        │
        ▼  ～Tm
LIGHT
EMISSION TIMING
        │
        ▼  ～43
LIGHT SOURCE DRIVER
        │
        ▼  ～3
LIGHT SOURCE
```

# FIG. 7

# FIG.8

## FIG. 9

## FIG. 10

## FIG. 11

# FIG. 12

# FIG. 13

# FIG. 14

# FIG. 15

Europäisches
Patentamt

European
Patent Office

Office européen
des brevets

# EUROPEAN SEARCH REPORT

Application Number

EP 23 18 4788

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2022/024632 A1 (FUJIFILM CORP [JP]) 3 February 2022 (2022-02-03) * figures 1-28 * * paragraph [0022] – paragraph [0131] * | 1-7 | INV. G02B26/08 G02B26/10 H04N9/31 G09G3/02 |
| A,P | & US 2023/162635 A1 (YOSHIZAWA HIROTOSHI [JP] ET AL) 25 May 2023 (2023-05-25) * figures 1-28 * * paragraph [0052] – paragraph [0160] * | 1-7 | |
| A | CN 109 729 321 A (ROKID TECH HANGZHOU CO LTD) 7 May 2019 (2019-05-07) * figures 1-9 * * paragraph [0049] – paragraph [0115] * | 1-7 | |

TECHNICAL FIELDS
SEARCHED        (IPC)

G02B
H04N
G09G

The present search report has been drawn up for all claims

| Place of search | Date of completion of the search | Examiner |
|---|---|---|
| Munich | 6 December 2023 | Kentischer, Florian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
......................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 18 4788

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2023

| Patent document cited in search report | Publication date | Patent family member(s) | Publication date |
|---|---|---|---|
| WO 2022024632 A1 | 03-02-2022 | CN 116171526 A | 26-05-2023 |
| | | EP 4191317 A1 | 07-06-2023 |
| | | JP WO2022024632 A1 | 03-02-2022 |
| | | US 2023162635 A1 | 25-05-2023 |
| | | WO 2022024632 A1 | 03-02-2022 |
| CN 109729321 A | 07-05-2019 | NONE | |

**EP 4 312 071 A1**

**REFERENCES CITED IN THE DESCRIPTION**

**Patent documents cited in the description**

- JP 2008170500 A